# EUROPEAN PATENT APPLICATION

(11) **EP 4 676 023 A1**
(43) Date of publication of application: **07.01.2026**
(21) Application number: 24927674.2
(22) Date of filing: 24.05.2024
(51) Int. Cl.: H04N 9/31

(54) **PROJECTOR SETTING METHOD**

(71) Applicant: Delta Electronics, Inc., Taoyuan City 333 (TW)
(72) Inventor: YANG, Chung-yi, Taoyuan City 333 (TW); YANG, Tzu-hung, Taoyuan City 333 (TW)
(74) Representative: Porta & Consulenti Associati S.p.A.
(86) International application number: PCT/CN2024/095131
(87) International publication number: WO 2025/241170

(57) **Abstract**

A projector setting method includes: using a computer system to configure a set of projection space parameters and a set of projector installation parameters about at least one projector; executing a projection simulation program, which uses the computer system to perform calculations based on the set of projection space parameters and the set of projector installation parameters, and determines a set of setting parameters for the projector; using the computer system to configure a set of allocation parameters for the projector, in which the set of allocation parameters includes an ID number and an IP address; and storing the set of allocation parameters and the set of setting parameters about the projector to a mobile device.

## Description

### BACKGROUND

### Technical Field

The present disclosure relates to a projector setting method.

### Description of Related Art

Current multi-projection applications often require the use of multiple projectors for edge blending to create immersive experiences. The setup and installation process involves many settings that need manual operation. For example, the setting of the projector network IP address and remote controller ID requires individual configuration for each unit after installation and pairing with the computer/remote controller. Only after this initial setup is completed can further installation settings begin. After the initial setup, the projectors need to be turned on to project images before further lens adjustments (such as focus, projected image size, and projection position) can be made.

However, since the placement of each projector is different, the settings for each projector also vary, which consumes a significant amount of time and manpower for various parameter adjustments. Moreover, current methods rely on human visual identification and experience for each single-unit correction and fine-tuning. If installation defects are found, the projectors have to be constantly repositioned and reinstalled, resulting in very high labor costs.

Accordingly, how to provide a projector setting method to solve the aforementioned problems becomes an important issue to be solved by those in the industry.

### SUMMARY

An aspect of the disclosure is to provide a projector setting method that can efficiently solve the aforementioned problems.

According to an embodiment of the disclosure, a projector setting method includes: using a computer system to configure a set of projection space parameters and a set of projector installation parameters about at least one projector; executing a projection simulation program, which uses the computer system to perform calculations based on the set of projection space parameters and the set of projector installation parameters, and determines a set of setting parameters about the at least one projector; using the computer system to configure a set of allocation parameters about the at least one projector, in which the set of allocation parameters includes at least one of an ID number and an IP address; and storing the set of allocation parameters and the set of setting parameters about the at least one projector to a mobile device.

In an embodiment of the disclosure, the set of projector installation parameters includes at least one of a projector position parameter, a projector installation orientation parameter, a lens viewing angle parameter, an exit pupil distance parameter, a projection optical axis and a lens shift amount parameter.

In an embodiment of the disclosure, the set of setting parameters includes at least one of a lens focal length/focal distance parameter, a lens mount position parameter, and a screen setting parameter.

In an embodiment of the disclosure, the projector setting method further includes: executing a geometry distortion correction calculation program, which uses the computer system to generate a set of warping amount parameters based on the set of projection space parameters and a screen setting parameter in the set of setting parameters.

In an embodiment of the disclosure, a number of the at least one projector is plural. The projector setting method further includes: calculating a projection overlap region according to the plural sets of projection space parameters of at least two of the projectors; and executing a blending calculation program, which generates plural sets of brightness gradation parameters according to the projection overlap region, in which the plural sets of brightness gradation parameters respectively correspond to the at least two of the projectors.

In an embodiment of the disclosure, the projector setting method further includes: executing a geometry distortion correction calculation program, which uses the computer system to generate a set of warping amount parameters based on the set of projection space parameters of at least one of the projectors and a screen setting parameter in the set of setting parameters; and calculating a blend start value of the plural sets of brightness gradation parameters according to the set of warping amount parameters.

In an embodiment of the disclosure, the projector setting method further includes: calculating a black level brightness difference of the projection overlap region; and generating a set of black level brightness compensation parameters according to the black level brightness difference.

According to an embodiment of the disclosure, the projector setting method includes: storing plural sets of allocation parameters and plural sets of setting parameters to a mobile device, in which the plural sets of allocation parameters respectively correspond to the plural sets of setting parameters, and each of the plural sets of allocation parameters includes at least one of an ID number and an IP address; and executing a data transmission program, which uses the mobile device to sequentially transmit the plural sets of allocation parameters and the plural sets of setting parameters respectively corresponding thereto to a plurality of projectors, respectively.

In an embodiment of the disclosure, the data transmission program is executed using near field communication technology.

In an embodiment of the disclosure, the projectors are in an off state during the executing the data transmission program.

Accordingly, in the projector setting method of the present disclosure, the projection simulation of the projector can be performed in the computer system to pre-set the projector installation parameters, the setting parameters, and the allocation parameters of the projectors, and the aforementioned parameters will then be transferred to the mobile device. When the projector is just unboxed, the mobile device can be used to write the relevant setting parameters into the memory of the corresponding projector. After multiple projectors are individually installed and positioned, each projector can automatically bring in the results of the simulation settings, thereby quickly completing IP address pairing with the computer, as well as relevant settings for the venue and projector lens position. In this way, the projector setting method of the present disclosure can reduce labor and time costs, thereby achieving the effect of accelerating the installation and setup process of the multiple projectors.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a flowchart of a projector setting method according to an embodiment of the present disclosure;
Fig. 2 is a schematic diagram of a simulation screen executed by a computer system according to an embodiment of the present disclosure;
Fig. 3 is a schematic diagram of a projection frustum according to an embodiment of the present disclosure;
Fig. 4A is a schematic diagram of a projection simulation program executed by the computer system according to an embodiment of the present disclosure;
Fig. 4B is another schematic diagram of the projection simulation program in Fig. 4A;
Fig. 5A is a schematic diagram of a state before executing a geometry distortion correction calculation program by the computer system according to an embodiment of the present disclosure;
Fig. 5B is a schematic diagram of a state after executing the geometry distortion correction calculation program by the computer system according to an embodiment of the present disclosure;
Fig. 6A is a schematic diagram of a state before executing a blending calculation program by the computer system according to an embodiment of the present disclosure;
Fig. 6B is a schematic diagram of a state after executing the blending calculation program by the computer system according to an embodiment of the present disclosure;
Fig. 7 is a schematic diagram of the computer system and a mobile device according to an embodiment of the present disclosure;
Fig. 8 is a flowchart of a projector setting method according to another embodiment of the present disclosure;
Fig. 9 is a schematic diagram of the mobile device and multiple projectors according to an embodiment of the present disclosure; and
Fig. 10 is a schematic diagram of the mobile device and one projector in Fig. 9.

### List of Reference Numerals

100a, 100b, 100c, 100d, P1, P2, P3, P4: projector
110: processor
120: transmission module
121, 410: antenna
122: memory
200: screen
300: computer system
310: graphics processing unit
400: mobile device
IM, IM': projected image
IMa: projection overlap region
IMb: projection non-overlap region
HFov: horizontal field of view
VFov: vertical field of view
S101, S102, S103, S104, S201, S202: step

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts. However, specific structural and functional details disclosed herein are merely representative for purposes of describing example embodiments, and thus may be embodied in many alternate forms and should not be construed as limited to only example embodiments set forth herein. Therefore, it should be understood that there is no intent to limit example embodiments to the particular forms disclosed, but on the contrary, example embodiments are to cover all modifications, equivalents, and alternatives falling within the scope of the disclosure.

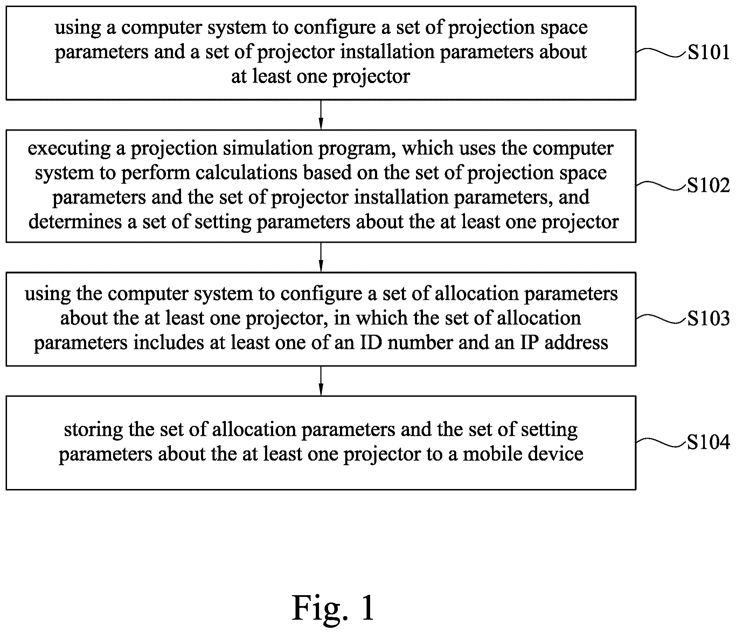

Reference is made to Fig. 1, which is a flowchart of a projector setting method according to an embodiment of the present disclosure. As shown in Fig. 1, the projector setting method includes steps S101 to S104. The details of these steps will be described below.

Step S101: using a computer system to configure a set of projection space parameters and a set of projector installation parameters about at least one projector.

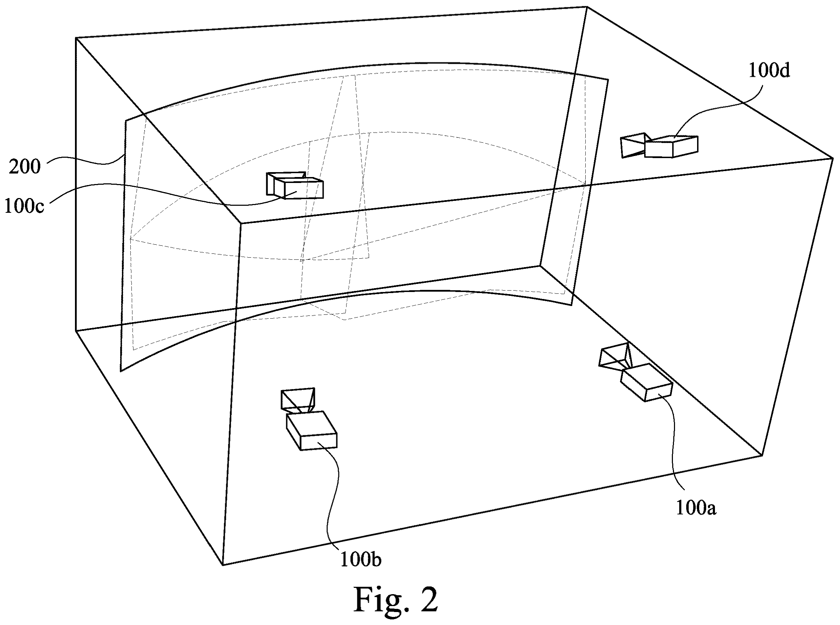

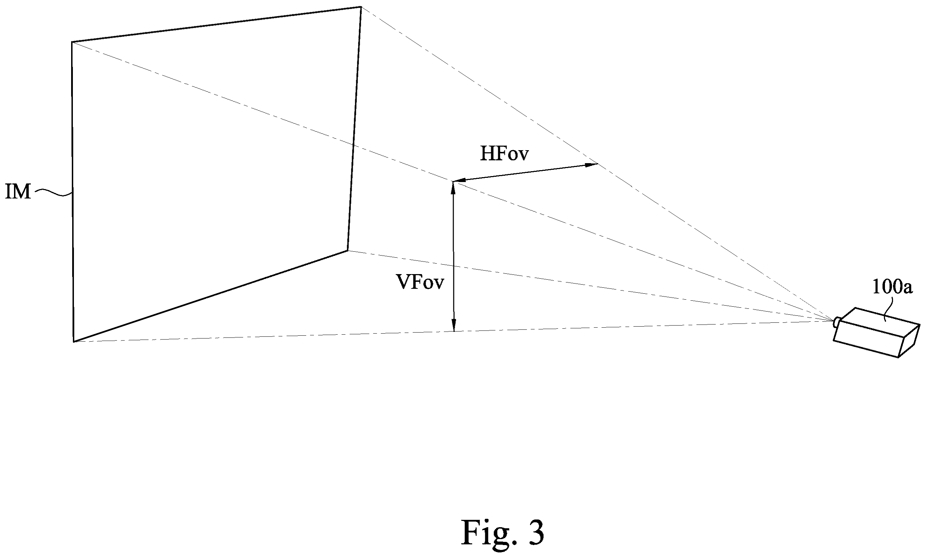

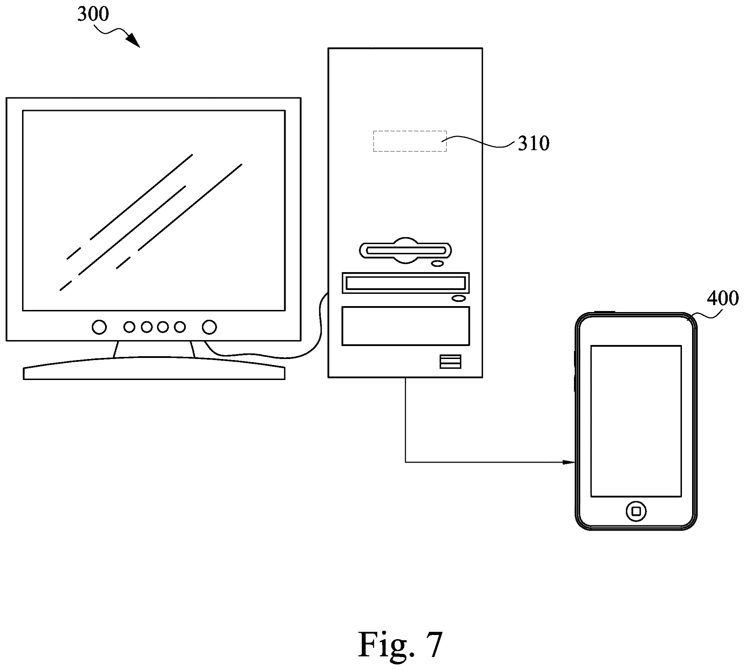

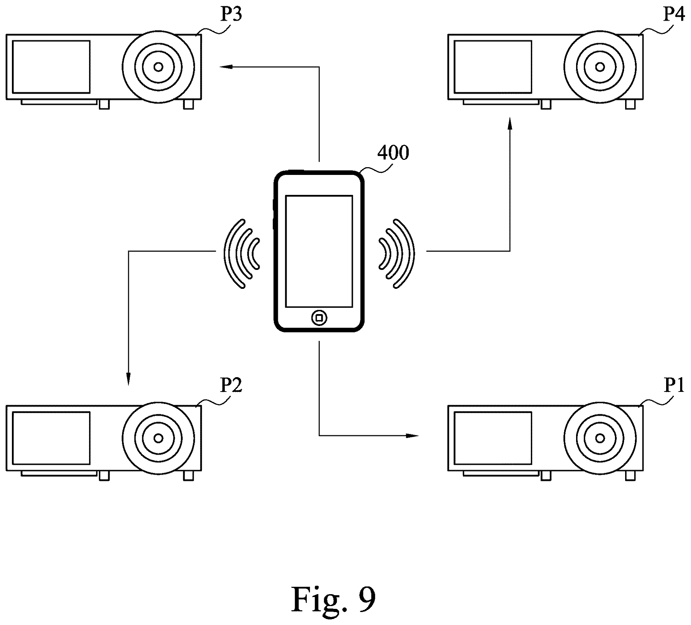

Reference is made to Fig. 2 and Fig. 3. Fig. 2 is a schematic diagram of a simulation screen executed by a computer system 300 (as seen in Fig. 7) according to an embodiment of the present disclosure. Fig. 3 is a schematic diagram of a projection frustum according to an embodiment of the present disclosure. In the simulation screen shown in Fig. 2, four projectors 100a, 100b, 100c, and 100d are projecting towards the same screen 200. It should be noted that the projectors 100a, 100b, 100c, and 100d are virtual projectors running in the computer system 300 and respectively correspond to physical projectors P1, P2, P3, and P4 in Fig. 9. According to step S101, a user can use the computer system 300 to configure four sets of projection space parameters and four sets of projector installation parameters about the four projectors 100a, 100b, 100c, and 100d. It should be noted that, as shown in Fig. 3, projection geometry of a projected image IM of the projector 100a is based on an exit pupil position of a projection lens of the projector 100a as an origin. According to an aspect ratio of the projected image IM of the projector 100a and a throw ratio of the projection lens, a projection horizontal field of view (HFOV) and a vertical field of view (VFOV) are formed, extending the frustum. The surface of an object within the frustum will be rendered as the projected image by a simulation program of a computer system.

In some embodiments, the projector installation parameters include at least one of a projector position parameter, a projector installation orientation parameter (for example, elevation angle, azimuth angle, roll angle), a lens viewing angle parameter, an exit pupil distance parameter, a projection optical axis and a lens shift amount parameter, but the present disclosure is not limited thereto. In practical applications, the projector installation parameters can form a Model View Projection (MVP) matrix extended from the projection optical origin of the projector 100a.

In some embodiments, the projection space parameters include an aspect ratio parameter, a width parameter, and a height parameter of the screen 200, but the present disclosure is not limited thereto.

Step S102: executing a projection simulation program, which uses the computer system to perform calculations based on the set of projection space parameters and the set of projector installation parameters, and determines a set of setting parameters about the at least one projector.

As shown in Fig. 2, according to step S101, when the user executes the projection simulation program, the four sets of setting parameters about the four projectors 100a, 100b, 100c, and 100d can be determined by the computer system 300 based on the four sets of projection space parameters and the four sets of projector installation parameters, respectively.

In some embodiments, the setting parameters include at least one of a lens focal length/focal distance parameter, a lens mount position parameter, and a screen 200 setting parameter, but the present disclosure is not limited thereto.

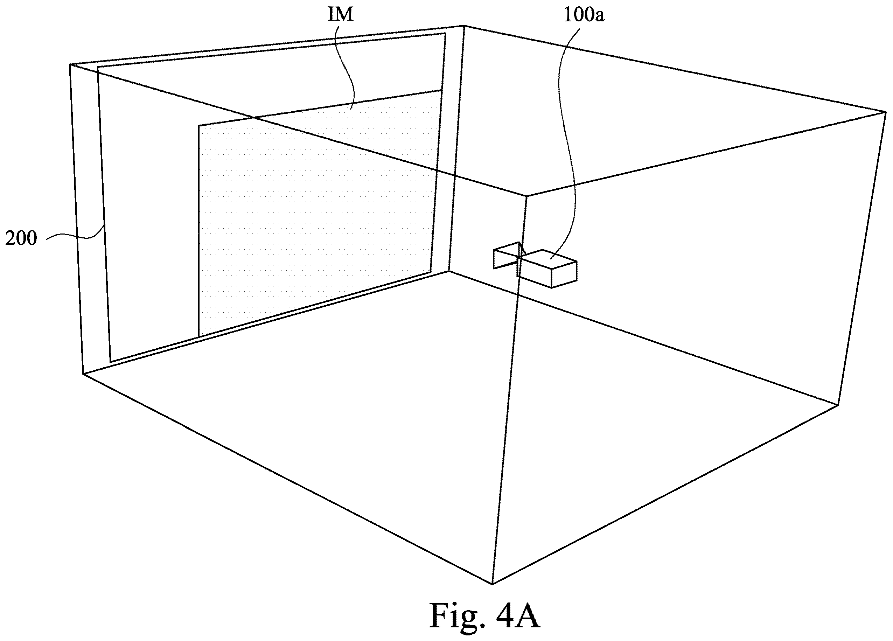

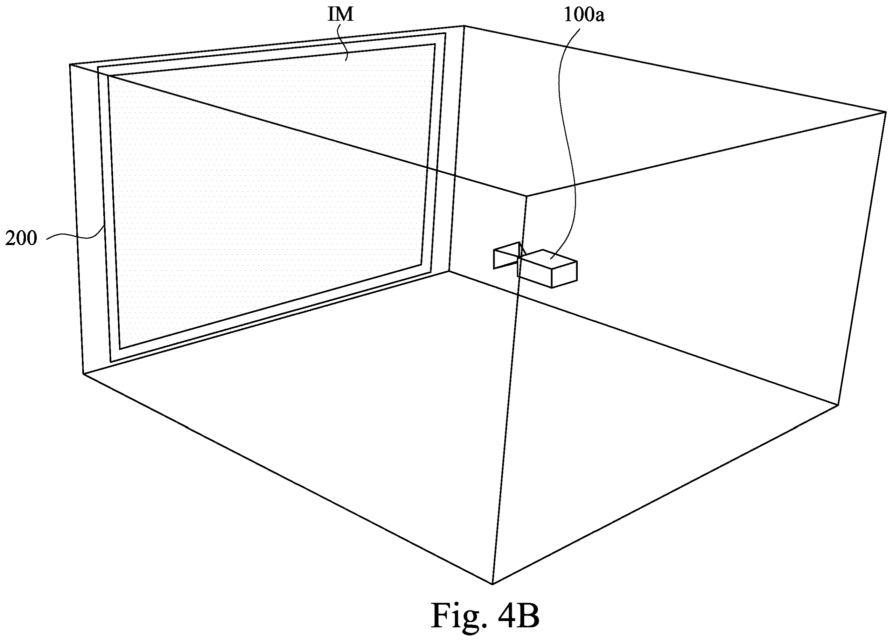

Reference is made to Fig. 4A and Fig. 4B. Fig. 4A is a schematic diagram of the projection simulation program executed by the computer system 300 according to an embodiment of the present disclosure. Fig. 4B is another schematic diagram of the projection simulation program in Fig. 4A. As shown in Fig. 4A, the lens focal length/focal distance parameter is adjusted to the minimum focal length, and combined with the displacement of a projection optical axis and a lens shift amount, the position of the projected image IM is moved to a desired display range on the screen 200 (such as the lower right corner of the screen 200 in Fig. 4A). Alternatively, as shown in Fig. 4B, the lens focal length/focal distance parameter may be adjusted to an appropriate focal length so that the position of the projected image IM completely matches the screen 200.

It should be noted that when the projection optical axis is not perpendicular to the surface of the screen 200, the projected image will have keystone distortion problems. Therefore, in some embodiments, the projector setting method may further include the following steps: executing a geometry distortion correction calculation program, which uses the computer system 300 to generate a set of warping amount parameters based on the set of projection space parameters and the screen setting parameter in the set of setting parameters.

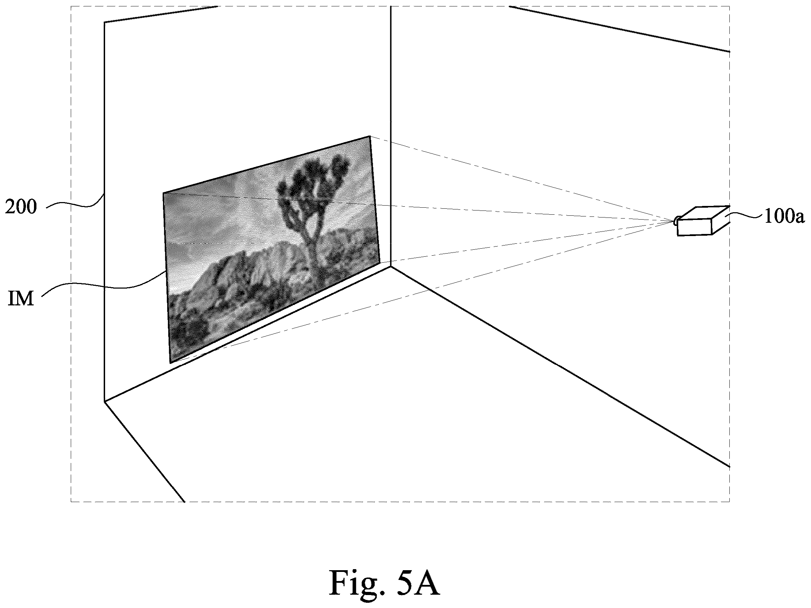

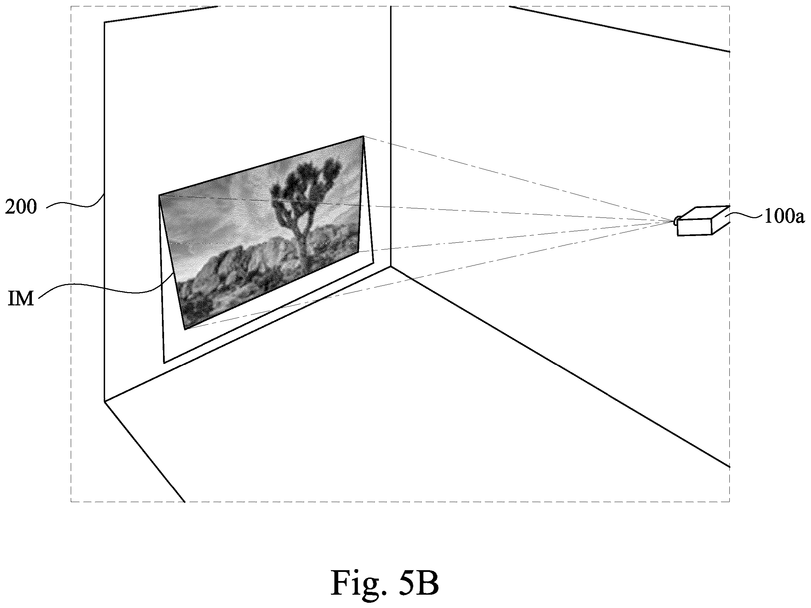

Reference is made to Fig. 5A and Fig. 5B. Fig. 5A is a schematic diagram of a state before executing a geometry distortion correction calculation program by the computer system 300 according to an embodiment of the present disclosure. Fig. 5B is a schematic diagram of a state after executing the geometry distortion correction calculation program by the computer system 300 according to an embodiment of the present disclosure. In this embodiment, the computer system 300 is configured to allow the user to adjust the vertical or horizontal keystone angle, and calculate a homography matrix of the keystone correction on the image plane of the projector 100a (i.e., the screen 200), which can be referred to as overall warp simulation. Specifically, the user can use the computer system 300 to perform homography matrix transformation according to the horizontal/vertical field of view angle of a target rendering point of the screen 200, an image resolution of the projector 100a, and a projection viewing angle of the projector 100a to obtain new planar coordinates. Then, these new planar coordinates are converted back to the pre-correction position through formula conversion and inverse homography matrix transformation, and the simulation result is as shown in Fig. 5B. In addition, with the aid of rotation simulation, after keystone correction, the rotation angle can be further corrected, thereby compensating for the angular error after keystone correction.

In some embodiments, the user can also use the computer system 300 to simulate the distortion effects of pincushion distortion or barrel distortion to make different image edge geometry distortions according to different walls (such as curved or cylindrical surfaces, etc.). In this way, a compensated flat projected image IM can be seen on the non-planar screen 200.

In some embodiments, the user can also use the computer system 300 to perform four-corner simulation to make fine adjustments to the four corners of the projected image IM, so that the overlapping areas between the projection range and the screen 200, or when the multiple projectors 100a, 100b, 100c, and 100d are tiled, have misaligned and shifted corners, which can be corrected back to the desired aligned positions.

In some embodiments, the user can also use the computer system 300 to perform linearity simulation. The linearity simulation is derived after the above-mentioned overall warp simulation and corrects the asymmetrical image between the horizontal or vertical center lines, so that the projected image IM looks vertically symmetrical and horizontally symmetrical.

With the warping amount parameters calculated by these overall warp simulations, the user can immediately use these parameters suitable for the installation site to eliminate image distortion problems after installing the projectors P1, P2, P3, and P4.

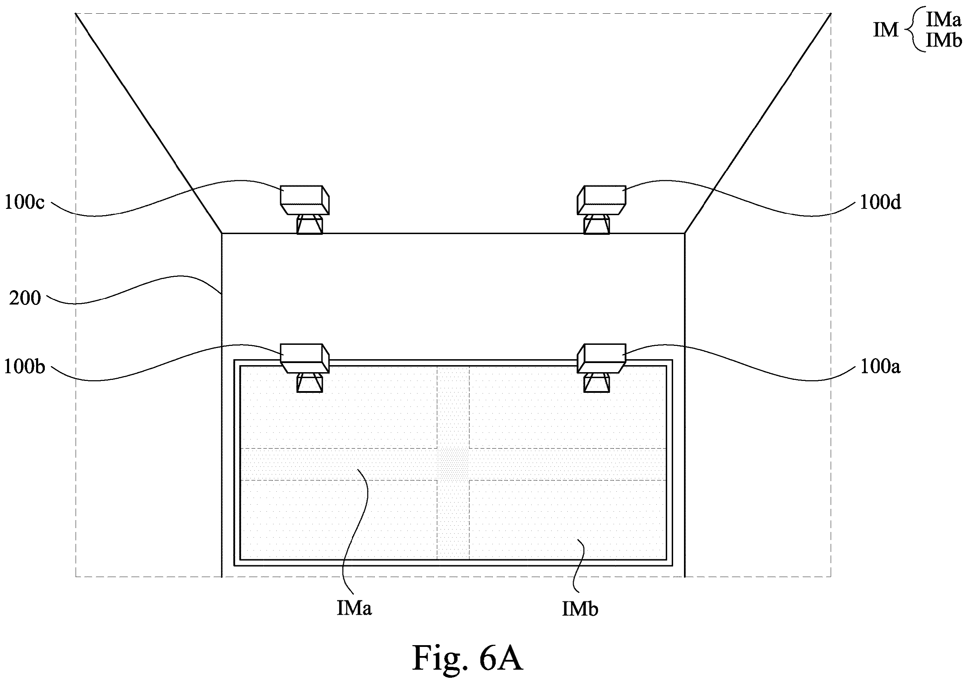

It should be noted that a projection overlap region IMa (as seen in Fig. 6A) of the projected images IM of the multiple projectors 100a, 100b, 100c, and 100d will make the image in that area brighter than a projection non-overlap region IMb due to the summation of brightness. Therefore, the rendering of the overlap region must be edge blended. Blend simulation is processed within a pixel shader of a graphics processing unit (GPU) 310 in the computer system 300 (as seen in Fig. 7). Therefore, in some embodiments, the projector setting method may further include the following steps: calculating a projection overlap region according to the projection space parameters of at least two of the projectors; and executing a blending calculation program, which generates plural sets of brightness gradation parameters according to the projection overlap region, in which the plural sets of brightness gradation parameters respectively correspond to the at least two of the projectors.

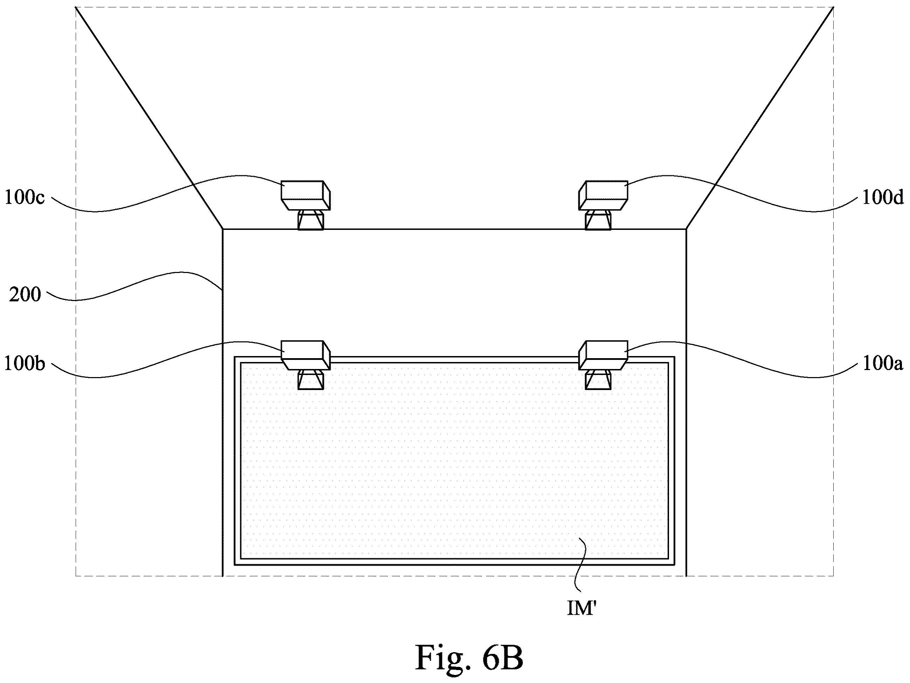

Reference is made to Fig. 6A and Fig. 6B. Fig. 6A is a schematic diagram of a state before executing a blending calculation program by the computer system 300 according to an embodiment of the present disclosure. Fig. 6B is a schematic diagram of a state after executing the blending calculation program by the computer system 300 according to an embodiment of the present disclosure. As shown in Fig. 6A, the projection overlap region IMa formed by the four projectors 100a, 100b, 100c, and 100d on the screen 200 is edge blending, which is the most common blending situation. Among them, the central part of the projection overlap region IMa is formed by the four projectors 100a, 100b, 100c, and 100d, and the other parts connecting the central part are each formed by two of the projectors 100a, 100b, 100c, and 100d. Specifically, when projecting on the projection overlap region IMa, the pixel shader of the graphics processing unit 310 in the computer system 300 proportionally dims the projected image IM according to the horizontal/vertical field of view angle of the target rendering point and the horizontal/vertical field of view angle of the projection overlap region IMa, so that the summed brightness is the same as the projection non-overlap region IMb, and a projected image IM' processed by the pixel shader of the graphics processing unit 310 as shown in Fig. 6B can be obtained.

In addition, for different geometry distortion modes of the multiple projectors 100a, 100b, 100c, and 100d that cause different positions of the blending region, the aforementioned overall warp simulation calculation results can be used to further calculate the blend start value to correspond to different blending region positions on the four sides of each projector 100a, 100b, 100c, and 100d. Therefore, in some embodiments, the projector setting method may further include the following steps: executing a geometry distortion correction calculation program, which uses the computer system to generate a set of warping amount parameters based on the set of projection space parameters of at least one of the projectors and the screen setting parameter in the set of setting parameters; and calculating a blend start value of the plural sets of brightness gradation parameters according to the set of warping amount parameters.

In addition, the user can also use the computer system 300 to simulate black level to compensate for the brightness of the projection non-overlap region IMb. By calculating and simulating the black level brightness difference that the projection overlap region IMa may cause, the brightness of the projection non-overlap region IMb is first increased to achieve the effect that all dark areas can present uniform brightness. Therefore, in some embodiments, the projector setting method may further include the following steps: calculating a black level brightness difference of the projection overlap region IMa; and generating a set of black level brightness compensation parameters according to the black level brightness difference.

With the brightness gradation parameters, the blend start value, and the black level brightness compensation parameters calculated by these blend simulations, the user can immediately use these parameters suitable for the installation site to eliminate image tiling problems after installing the projectors P1, P2, P3, and P4.

Step S103: using the computer system 300 to configure a set of allocation parameters about the at least one projector, in which the set of allocation parameters includes at least one of an ID number and an IP address.

Step S104: storing the set of allocation parameters and the set of setting parameters about the at least one projector to a mobile device.

Reference is made to Fig. 7, which is a schematic diagram of the computer system 300 and the mobile device 400 according to an embodiment of the present disclosure. With reference to Fig. 7, it can be known from the above content that according to the projector setting method of this embodiment, the projection simulation of the projectors 100a, 100b, 100c, and 100d can be performed in the computer system 300 to pre-set the projector installation parameters, the setting parameters, and the allocation parameters of the projectors 100a, 100b, 100c, and 100d, and the aforementioned parameters will then be transferred to the mobile device 400. In the embodiment shown in Fig. 7, the mobile device 400 is exemplified by a mobile phone, but the present disclosure is not limited thereto.

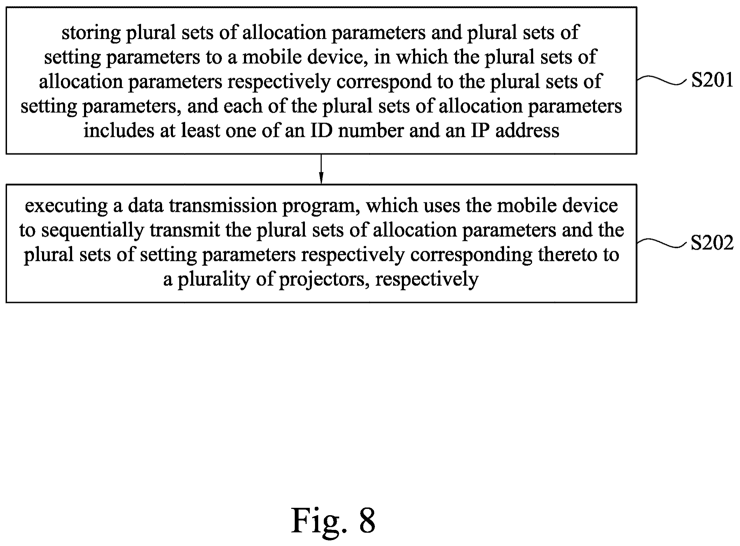

Reference is made to Fig. 8, which illustrates a flowchart of a projector setting method according to another embodiment of the present disclosure. As shown in Fig. 8, the projector setting method includes steps S201 and S202. The details of these steps will be described below.

Step S201: storing plural sets of allocation parameters and plural sets of setting parameters to a mobile device, in which the plural sets of allocation parameters respectively correspond to the plural sets of setting parameters, and each of the plural sets of allocation parameters includes at least one of an ID number and an IP address.

Reference is made to Fig. 9, which is a schematic diagram of the mobile device 400 and the multiple projectors P1, P2, P3, and P4 according to an embodiment of the present disclosure. As shown in Fig. 9, the mobile device 400 stores four sets of allocation parameters and four sets of setting parameters respectively corresponding to multiple projectors P1, P2, P3, and P4. The four sets of allocation parameters and the four sets of setting parameters correspond respectively, and each set of allocation parameters includes an independent ID number and IP address.

Step S202: executing a data transmission program, which uses the mobile device to sequentially transmit the plural sets of allocation parameters and the plural sets of setting parameters respectively corresponding thereto to a plurality of projectors, respectively.

When executing the data transmission program, for example, the user can transmit the first set of allocation parameters and the first set of setting parameters to the projector P1, then transmit the second set of allocation parameters and the second set of setting parameters to the projector P2, then transmit the third set of allocation parameters and the third set of setting parameters to the projector P3, and finally transmit the fourth set of allocation parameters and the fourth set of setting parameters to the projector P4.

In summary, the user can plan the positions of the multiple projectors 100a, 100b, 100c, and 100d in the computer system 300. According to the desired projection method and the cooperation of the environment (for example, screen 200, space size limitation), the installation positions and angles can be pre-determined through simulation. Then, according to each position of the projectors 100a, 100b, 100c, and 100d, each sets an independent ID number and IP address, and these allocation parameters are respectively input into the projectors P1, P2, P3, and P4 through the mobile device 400, so that the projectors P1, P2, P3, and P4 can be paired with a remote controller for control in the future and can be identified by the computer system 300. Therefore, the projector setting method of this embodiment can make the installation process faster and more convenient.

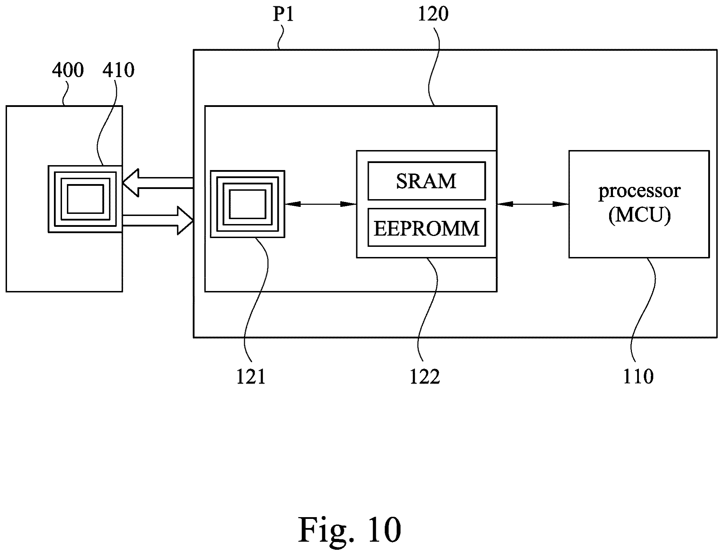

Reference is made to Fig. 10, which is a schematic diagram of the mobile device 400 and one projector P1 in Fig. 9. As shown in Fig. 10, specifically, the projector P1 includes a processor 110 and a transmission module 120. The transmission module 120 includes an antenna 121 and a memory 122. The mobile device 400 includes an antenna 410. The transmission module 120 and the mobile device 400 transmit data through the antenna 121 and the antenna 410, respectively. The processor 110 is configured to process the data received by the transmission module 120. In some embodiments, the aforementioned data transmission program is executed using near field communication (NFC) technology. When the projector P1 is just unboxed and there is no power input (i.e., the projector P1 is in an off state), the characteristic of self-powering through near field communication allows the user to transmit a set of allocation parameters and a set of setting parameters corresponding to the projector P1 into the memory 122 of the projector P1.

In practical applications, the data transmission program may be executed using other wireless communication technologies or wired transmission technologies.

According to the foregoing recitations of the embodiments of the disclosure, it can be seen that in the projector setting method of the present disclosure, the projection simulation of the projector can be performed in the computer system to pre-set the projector installation parameters, the setting parameters, and the allocation parameters of the projectors, and the aforementioned parameters will then be transferred to the mobile device. When the projector is just unboxed, the mobile device can be used to write the relevant setting parameters into the memory of the corresponding projector. After multiple projectors are individually installed and positioned, each projector can automatically bring in the results of the simulation settings, thereby quickly completing IP address pairing with the computer, as well as relevant settings for the venue and projector lens position. In this way, the projector setting method of the present disclosure can reduce labor and time costs, thereby achieving the effect of accelerating the installation and setup process of the multiple projectors.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

## Claims

1. A projector setting method, comprising:
using a computer system to configure a set of projection space parameters and a set of projector installation parameters about at least one projector;
executing a projection simulation program, which uses the computer system to perform calculations based on the set of projection space parameters and the set of projector installation parameters, and determines a set of setting parameters about the at least one projector;
using the computer system to configure a set of allocation parameters about the at least one projector, wherein the set of allocation parameters comprises at least one of an **ID** number and an **IP** address; and
storing the set of allocation parameters and the set of setting parameters about the at least one projector to a mobile device.

2. The projector setting method of claim 1, wherein the set of projector installation parameters comprises at least one of a projector position parameter, a projector installation orientation parameter, a lens viewing angle parameter, an exit pupil distance parameter, a projection optical axis and a lens shift amount parameter.

3. The projector setting method of claim 1, wherein the set of setting parameters comprises at least one of a lens focal length/focal distance parameter, a lens mount position parameter, and a screen setting parameter.

4. The projector setting method of claim 1, further comprising:
executing a geometry distortion correction calculation program, which uses the computer system to generate a set of warping amount parameters based on the set of projection space parameters and a screen setting parameter in the set of setting parameters.

5. The projector setting method of claim 1, wherein a number of the at least one projector is plural, and the projector setting method further comprises:
calculating a projection overlap region according to the plural sets of projection space parameters of at least two of the projectors; and
executing a blending calculation program, which generates plural sets of brightness gradation parameters according to the projection overlap region, wherein the plural sets of brightness gradation parameters respectively correspond to the at least two of the projectors.

6. The projector setting method of claim 5, further comprising:
executing a geometry distortion correction calculation program, which uses the computer system to generate a set of warping amount parameters based on the set of projection space parameters of at least one of the projectors and a screen setting parameter in the set of setting parameters; and
calculating a blend start value of the plural sets of brightness gradation parameters according to the set of warping amount parameters.

7. The projector setting method of claim 5, further comprising:
calculating a black level brightness difference of the projection overlap region; and
generating a set of black level brightness compensation parameters according to the black level brightness difference.

8. A projector setting method, comprising:
storing plural sets of allocation parameters and plural sets of setting parameters to a mobile device, wherein the plural sets of allocation parameters respectively correspond to the plural sets of setting parameters, and each of the plural sets of allocation parameters comprises at least one of an ID number and an IP address; and
executing a data transmission program, which uses the mobile device to sequentially transmit the plural sets of allocation parameters and the plural sets of setting parameters respectively corresponding thereto to a plurality of projectors, respectively.

9. The projector setting method of claim 8, wherein the data transmission program is executed using near field communication technology.

10. The projector setting method of claim 8, wherein the projectors are in an off state during the executing the data transmission program.
